# EUROPEAN PATENT APPLICATION

(11) **EP 4 819 066 A1**
(43) Date of publication of application: **07.10.2026**
(21) Application number: 25167391.9
(22) Date of filing: 31.03.2025
(51) Int. Cl.: G06V 10/82

(54) **DEVICE AND COMPUTER IMPLEMENTED METHOD FOR EVALUATING A DIGITAL IMAGE WITH A MODEL AND TRAINING OF THE MODEL**

(71) Applicant: Robert Bosch GmbH, 70442 Stuttgart (DE)
(72) Inventor: Zhou, Hongkuan, 70188 Stuttgart (DE); Schmid, Stefan, 71332 Waiblingen (DE); Sadikaj, Ylli, 1090 Wien (AT); Halilaj, Lavdim, 71229 Leonberg (DE)

(57) **Abstract**

The disclosure refers to a computer-implemented method (100) for training a model for evaluating a digital image (x) depicting a first object with regard to an anomaly of the object, and a computer-implemented method (200) for evaluating a digital query image (x) depicting a second object (208) using model trained with a method according (100).

## Description

### Background

The disclosure relates to a method for evaluating a digital image with a model and to a method for training the model.

Digital images are evaluated for example in a wide range of applications. Evaluating a digital image with regard to an anomaly or a defect is for example known from the field medical image analysis and in defect detection in production processes. In general usage, the term anomaly may be preferred for some applications and the term defect for others. In the context of the present disclosure, the term "anomaly" is also used interchangeably with the term "defect".

The known current methods are limited to solely detecting whether the image depicts and anomaly or not, for example whether a product is defective or not, without providing any insights on the anomaly type, nevertheless detecting and identifying multiple anomalies.

### Disclosure of the invention

An embodiment of the invention refers to a computer implemented method for training a model for evaluating a digital image depicting a first object with regard to an anomaly of the object, the method comprising the following steps:
- providing the digital image labeled with a ground truth label, wherein the ground truth label comprises a least a ground truth multi-anomaly label, the ground truth multi-anomaly label referring to one normal class associated with a normal state of the object without any anomaly and a plurality of anomaly classes associated with a plurality of anomaly types of the first object,
- providing a first group of anomaly-aware text prompt embeddings, the first group of anomaly-aware text prompt embeddings comprising a first set of text prompt embeddings associated with the normal state of the first object without any anomaly and a plurality of sets of text prompt embeddings associated with the plurality of anomaly types of the first object, and
- providing at least one image embedding of the digital image,
- training the model for determining at least one similarity map by comparing the at least one image embedding with the first group of anomaly-aware text prompt embeddings by applying a loss function on the ground truth multi-anomaly label.

The ground truth multi-anomaly label is for example a ground truth multi-anomaly segmentation map. A ground truth multi-anomaly segmentation map provides the correct labels for different anomaly types, for example defect types of an object, such as cracks, dents, etc., allowing the model to learn how to detect and segment such anomalies accurately, in particular in new, unseen data. The ground truth multi-defect segmentation map might be used for both model training and evaluation, for detecting and segmenting multiple anomalies in images and to assess an effectiveness of defect detection algorithms, in particular in real-world applications.

The method suggests to provide a set of text prompt embeddings associated with the normal state of the first object without any anomaly and a plurality of sets of text prompt embeddings associated with the plurality of anomaly types of the first object, such that the model learns to distinguish different anomaly types. The anomaly types represent distinct anomaly types of the object domain.

Training of the model is based on a loss function addressing class imbalance issues for example focal loss. Such a loss function is beneficial especially in tasks like object detection where there is often a significant imbalance between classes. For example, the model is trained with a high number of normal images of the first object in a normal state without any anomaly and low number of abnormal images of the first object comprising one or more anomaly types of the plurality of anomaly classes.

The model is for example a CLIP-based model. A contrastive Language Image Pre-training, CLIP, model is a large-scale vision-language model pre-trained on numerous image-text pairs. The model aims to maximize the correlation between image embeddings and text embeddings utilizing cosine similarity. According to an example, the model encompasses a text feature encoder and an image feature encoder.

The text feature encoder or text encoder briefly, provides the text prompt embeddings based on text prompts. For example, the text encoder is fed with a first group of anomaly-aware text prompts, the first group of anomaly-aware text prompts comprising a first set of text prompts associated with the normal state of the first object without any anomaly and a plurality of sets of text prompt associated with the plurality of anomaly types of the first object. For each set of text prompts, a set of text prompt embeddings comprising an averaged text prompt embedding might be obtained by averaging the text prompt embeddings of the individual text prompts of the respective set. Each averaged text prompt embedding represents a distinct state, i.e. a normal state or an anomaly type.

The image feature encoder, or image encoder or visual encoder briefly, provides image embeddings based on the digital image.

Further, the model comprises at least one adapter, for example comprising a single linear layer, is used to align the textual and the visual representations, namely the text prompt embeddings and the image embeddings, in a joint feature space.

According to an example, providing the at least one image embedding of the digital image comprises providing image patch embeddings at at least two stages, preferably more than two, for example four stages.

According to an example, the image patch embeddings of each stage are aligned with the anomaly-aware text prompt embeddings of the first group of anomaly-aware text prompt embeddings. Therefore, at each stage a similarity map is provided by comparing the image patch embeddings of the respective stage with the text prompt embeddings. For image patch embeddings at four different stages, four similarity maps are obtained. Each similarity map may be up-sampled, to match the size of the digital image, and aligned with the ground truth multi-anomaly label, i.e. the ground truth multi-anomaly segmentation map.

According to an embodiment, the ground truth label comprises a least a ground truth binary anomaly label, and the model is trained based on a combined loss function, wherein the loss function comprises a loss addressing class imbalance applied on the ground truth multi-anomaly label and a loss addressing image segmentation task applied to the ground truth binary anomaly label. The ground truth binary anomaly label is for example a ground truth binary anomaly map. A ground truth binary anomaly map indicates the presence or absence of anomaly in the digital image. It is suggested to apply the focal loss for multi-anomaly segmentation along with the binary dice loss for anomaly segmentation. These two training objectives may be combined to form the final loss function.

According to an embodiment, providing the at least one image embedding of the digital image comprises providing a global image embedding, and the model is trained to determine a global anomaly score based on similarity scores, wherein each similarity score is determined by comparing the global image embedding with a respective set of text prompt embedding of the first group of anomaly-aware text prompt embeddings.

The complements of the similarity scores compared to the first set of text prompt embeddings associated with the normal state of the first object without any anomaly serve as the global anomaly score. The global anomaly score is a single score that represents the degree of anomaly.

A further embodiment refers to a computer implemented method for evaluating a digital image depicting a second object using a model trained with a method according to any of claims 1 to 5, the method comprising the following steps:
- providing at least one digital query image depicting the second object;
- providing a second group of anomaly-aware text prompt embeddings, the second group of anomaly-aware text prompt embeddings comprising a first set of text prompt embeddings associated with a normal state of the second object without any anomaly and a plurality of sets of text prompt embeddings associated with a plurality of anomaly types of the second object,
- determining a least one similarity map by comparing the at least one image embedding of the digital query image with the second group of anomaly-aware text prompt embeddings,

- determining an anomaly map based on the at least one similarity map, and
- perform anomaly segmentation and/or anomaly detection at least based on the anomaly map.

The second group of anomaly-aware text prompt embeddings is provided by input a second group of anomaly-aware text prompts of anomaly-aware text prompts into the text encoder. The second group of anomaly-aware text prompts comprising a first set of text prompts associated with the normal state of the second object without any anomaly and a plurality of sets of text prompt associated with the plurality of anomaly types of the second object. For each set of text prompts, a set of text prompt embeddings comprising an averaged text prompt embedding might be obtained by averaging the text prompt embeddings of the individual text prompts of the respective set. Each averaged text prompt embedding represents a distinct state, i.e. a normal state or an anomaly type.

The query image is passed through the image encoder for providing image embeddings, and through an adapter for providing image patch embeddings at at least two stages, preferably more than two, for example four stages.

At least two adapters, preferably more than two, for example four adapters, for example comprising a single linear layer, are used to align the textual and the visual representations, namely the text prompt embeddings and the image patch embeddings at each stage, in a joint feature space. According to an example, the image patch embeddings of each stage are aligned with the anomaly-aware text prompt embeddings of the second group of anomaly-aware text prompt embeddings. Therefore, at each stage a similarity map is provided by comparing the image patch embeddings of each stage with the text prompt embeddings. For image patch embeddings at four different stages, four similarity maps are obtained. Each similarity map may be up-sampled, to match the size of the query image, and then averaged to produce at least one anomaly map, for example a multi-anomaly segmentation map. The multi-anomaly segmentation map captures both the anomaly locations and their respective anomaly types, enabling it to effectively support the multi-anomaly segmentation task.

According to an embodiment, the first object, depicted in the digital image used in the training method, differs from the second object, depicted in the digital query images, and the first group of anomaly-aware text prompt embeddings used in the training method differs from the second group of anomaly-aware text prompt embeddings. In inference phase, the method for evaluating a digital image is applied to unseen data. The data set, which was used to train the model in training phase, differs from the data set, which is applied in inference phase.

According to an embodiment, the method comprises determining a global anomaly score by comparing the at least one image embedding of the digital query image with the second group of anomaly-aware text prompt embeddings. The global anomaly score is determined based on similarity scores, wherein each similarity score is determined by comparing a global image embedding with a respective set of text prompt embedding of the second group of anomaly-aware text prompt embeddings. The complements of the similarity scores compared to the first set of text prompt embeddings associated with the normal state of the second object without any anomaly serve as the global anomaly score.

According to an example, the method comprises zero-shot learning which means that unseen data is applied to the model.

When performing zero-shot learning, anomaly segmentation is performed based the anomaly map and at least one ground truth label of the query image and/or anomaly detection is predicted based on the anomaly map and the global anomaly score.

The anomaly map might be obtained by taking a first layer of each of the similarity maps and perform a complement operation on each pixel to create an respective anomaly score map based on a respective similarity map, wherein the anomaly score maps are then averaged to obtain the anomaly map.

For zero-shot learning, the anomaly map and the ground truth label of the query image are used for anomaly segmentation. For zero-shot anomaly detection, the highest anomaly score on the anomaly map and global anomaly score are averaged and then compared against a threshold to determine whether the query image contains an anomaly.

According to an example, the method comprises few-shot learning. For few-shot learning, at least one or more reference images depicting the second object in a normal state are provided.

According to an embodiment, at least one reference image is provided, and wherein a reference anomaly map is determined based on the query image and the at least one reference image, wherein few-shot anomaly segmentation is performed based on an anomaly map and the reference anomaly map and/or few-shot anomaly detection is performed based on the anomaly map and the reference anomaly map and the global anomaly score.

The reference anomaly map is determined based on the similarity between the query image and the at least one reference image. Both, the query image and the at least one reference image are fed into the image encoder to determine image patch embeddings. Reference similarity maps may be calculated by a cosine similarity between the corresponding image patches of query image and the at least one reference image. The reference similarity maps are up-sampled to match the resolution of the original query image and then averaged to obtain the reference anomaly map.

The anomaly map and the reference anomaly map may be combined to a final anomaly map, which is used for few-shot anomaly segmentation. For few-shot anomaly detection, the highest anomaly score on the final anomaly map and the global anomaly score are averaged and then compared against a threshold to determine whether the query image contains an anomaly.

According to an embodiment, in text prompts associated with anomaly types that are not applicable to the second object are excluded from the second group of anomaly-aware text prompt embeddings. For example, only text prompts associated with anomaly types applicable to the second object are fed to the text encoder, in particular by applying a filtering step. For a specific object type, only certain anomaly types might be relevant. During the inference phase, the filtering step excludes text prompt sets associated with anomaly types that are not applicable to the object, ensuring that only relevant anomaly types are considered.

A further embodiment refers to a model for evaluating a digital image depicting an object or a device comprising a model for evaluating a digital image depicting an object with regard to an anomaly of the object in a method according to one of the claims 1 to 5 and/or in a method according to one of the claims 6 to 11. The model comprises at least one text encoder for providing text prompt embeddings, at least one image encoder for providing image embeddings and at least one adapter, for example comprising a single linear layer, is used to align the textual and the visual representations, namely the text prompt embeddings and the image embeddings, in a joint feature space.

According to an embodiment, the model comprises at least two or more, for example four, adapters for providing image patch embeddings at at least two or more stages, for example four stages. Each adapter is used at one respective stage to align the textual and the visual representations, namely the text prompt embeddings and the image patch embeddings at each stage, in a joint feature space. According to an example, the image patch embeddings of each stage are aligned with the anomaly-aware text prompt embeddings of the first or the second group of anomaly-aware text prompt embeddings. Therefore, at each stage a similarity map is provided by comparing the image patch embeddings of each stage with the text prompt embeddings. For image patch embeddings at four different stages, four similarity maps are obtained.

A further embodiment refers to a first group of anomaly-aware text prompts comprising a first set of text prompts associated with a normal state of a first object without any anomaly and a plurality of sets of text prompts associated with a plurality of anomaly types of the first object and/or a second group of anomaly-aware text prompts comprising a first set of text prompts associated with a normal state of a second object without any anomaly and a plurality of sets of text prompts associated with a plurality of anomaly types of the second object, wherein the first group of anomaly-aware text prompts and/or the second group of anomaly-aware text prompts is employed to provide a first group of anomaly-aware text prompts embeddings and/or a second group of anomaly-aware text prompts embeddings in a method according to one of the claims 1 to 5 and/or in a method according to one of the claims 6 to 11.

For construction of anomaly-aware text prompts meta-data from established industrial defect detection datasets, including MVTec-AD, VisA, MPDD, Real IAD, and MAD, may be leveraged, to acquire comprehensive defect-aware information for different product classes. Additionally, supplementary defect-type properties, like attributes including size and shape, may be incorporated into a knowledge base for anomalies.

Initially, anomalies may be grouped into according to anomaly type. For examples anomalies or defects such that "bent", "bent lead", and "bent wire" are represented by the anomaly type "bent", similarly "scratch", "scratch head", and "scratch neck" are under anomaly type "scratch". Thus, anomaly types like "bent", "cut", "scratch", capture possible anomalies or defects that may occur in a given dataset.

For constructing anomaly-aware text prompts, the constructed knowledge base for anomalies may be utilize as prior knowledge. To construct text prompts for each given anomaly type a set of variations of text samples is used.

For example for constructing text prompts for the anomaly type "bent" the following set of variations of text samples may be used
*"[object] has* a *bent defect"*
*"flawed [object] with a bent lead"*
*"a bend found in [object]"*
*"[object] has a slight curve defect"*
*"[object] with noticeable bending"*
*"a bent wire on [object]".*

A further embodiment refers to use of a computer-implemented method according to one of the claims 1 to 5 and/or a method according to one of the claims 6 to 11 and/or a model according to claim 12 and/or a first group of anomaly-aware text prompts or a second group of anomaly-aware text prompts according to claims 13 for training a model for evaluating a digital image and/or for evaluating a digital query image, for image evaluation in the field of medical image analysis or in defect detection in production processes. The digital image depicts a first object and the digital query image depicts a second object, wherein the first and/or the subject object is or represents for example one of a work piece or part of a work piece, various tissues, bones, organs, and pathological structures within a human body.

Providing the digital image may comprise capturing the digital image in particular with an image sensor, in particular a camera of an optical inspection device for defect detection in production processes or for medical image analysis, in particular based on the imaging modality, like X-ray, MRI scan, CT scan.

A device for evaluating the digital image comprises at least one processor and at least one storage for storing the digital image and instructions that, when executed by the at least one processor, cause the at least one processor to execute the method, wherein the at least one processor is configured for executing the instructions. The device provides advantages that correspond to the advantages the method provides.

A program may be provided, wherein the program comprises instructions that, when executed by at least one processor, cause the at least one processor to execute the method. The program provides advantages that correspond to the advantages the method provides.

Further embodiments are derived from the following description and the drawing. In the drawing:
- Fig. 1: depicts a schematic overview of a method for training a model for evaluating a digital image depicting a first object,
- Fig. 2: depicts a schematic overview of a method for evaluating a digital image depicting a second object,

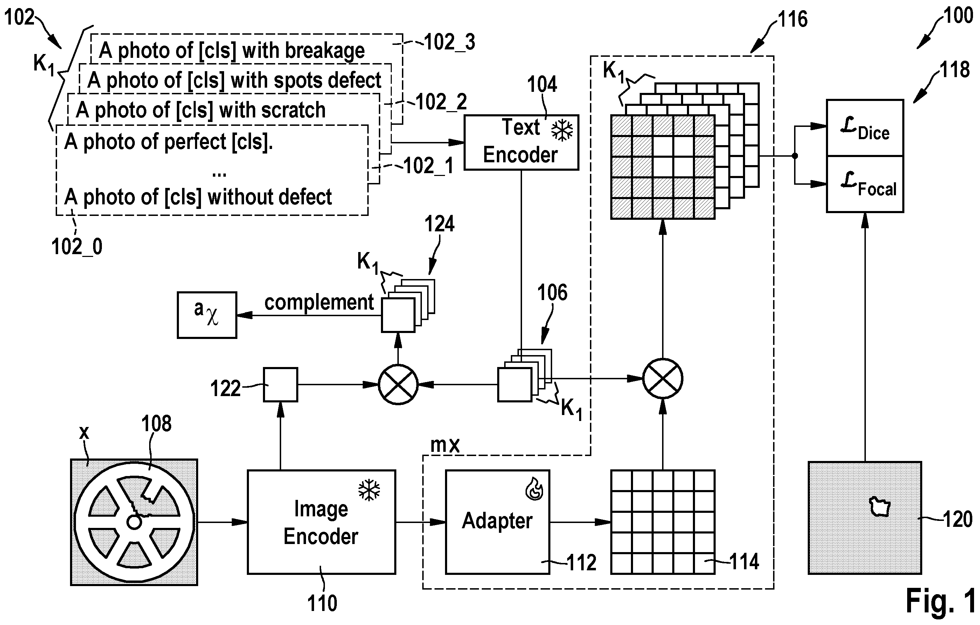

Figure 1 depicts schematically overview of a method 100 for training a model for evaluating a digital image x depicting a first object. The model is for example a CLIP-based model. A contrastive Language Image Pre-training, CLIP, model is a large-scale vision-language model pre-trained on numerous image-text pairs.

The model aims to maximize the correlation between image embeddings and text embeddings utilizing cosine similarity.

A datasets for training consists for example of X, Y or Y', wherein $X = {\left\{{x}_{i}\right\}}_{i = 1}^{N}$ with N images, and $Y = {\left\{{M}_{i}, {y}_{i}\right\}}_{i = 1}^{N}$ or $Y ′ = {\left\{M{′}_{i}\right\}}_{i = 1}^{N}$ with ground truth labels.

The digital image x is for example a digital photo, a video image, a radar image, a LiDAR image, an ultrasound image, a motion image or a thermal image, an X-ray image, an MRI scan or a CT scan.

The digital image x depicts a first object 108. The digital image x is labeled with a ground truth label, wherein the ground truth label comprises a least a ground truth multi-anomaly label, the ground truth multi-anomaly label referring to one normal class associated with a normal state of the object without any anomaly and a plurality of anomaly classes associated with a plurality of anomaly types of the first object.

The ground truth multi-anomaly label is or comprises for example a ground truth multi-anomaly segmentation map. A ground truth multi-anomaly segmentation map provides the correct labels for different anomaly types, for example defect types of an object, such as cracks, dents, etc., allowing the model to learn how to detect and segment such anomalies accurately, in particular in new, unseen data. The ground truth multi-defect segmentation map might be used for both model training and evaluation, for detecting and segmenting multiple anomalies in images and to assess an effectiveness of defect detection algorithms, in particular in real-world applications.

Further, the ground truth label comprises a least a ground truth binary anomaly label. The ground truth binary anomaly label is for example a ground truth binary anomaly map. A ground truth binary anomaly map indicates the presence or absence of anomaly in the digital image.

In other words, for multi-type detection and segmentation each image of the dataset for training ${x}_{i} ∈ {ℝ}^{H \times W}$ is labeled with *M'ᵢ* ∈ {0, 1, *... K*}*^{HxW}* representing the multi-defect segmentation map for one normal class and K abnormal classes. Multi-type anomaly detection and segmentation aim to locate the anomalies and identify various anomaly types.

For binary detection and segmentation, each image of the dataset for training *xᵢ* ∈ ${ℝ}^{H \times W}$ is masked with *Mᵢ* and labeled with *yᵢ*, where *yᵢ* ∈ {0, 1} is the indicator for anomaly or not and *Mᵢ* ∈ {0, 1}^{H×W} represents the binary anomaly map. Binary anomaly detection and segmentation aim to determine if the given image x contains anomalies and locate regions in an image that contain anomalies.

A first group of anomaly-aware text prompts 102, comprising a plurality of anomaly-aware text prompts, in particular K1+1 anomaly-aware text prompts, are provided. The first group of anomaly-aware text prompts 102 comprising a first set of text prompts associated with the normal state of the first object without any anomaly and K1 sets of text prompts associated with K1 anomaly types of the first object.

For example, a first set of text prompts 102_0 associated with the normal state of the first object comprises i.e. the following text prompts:
*"a photo of perfect [object]", ..., "a photo of [object] without defect",...*

For example, a set 102_1 of the K1 sets of text prompts associated with K1 anomaly types of the first object comprises i.e. the following text prompt:
*"a photo of [object] with scratch"*

For example, a set 102_2 of the K1 sets of text prompts associated with K1 anomaly types of the first object comprises i.e. the following text prompt:
*"a photo of [object] with spots defect"*

For example, a set 102_3 of the K1 sets of text prompts associated with K1 anomaly types of the first object comprises i.e. the following text prompt:
*"a photo of [object] with breakage"*

The first group of anomaly-aware text prompts 102 is fed into a text feature encoder 104 or text encoder briefly, of the model, to provide text prompt embeddings based on the text prompts. For each set of text prompts, a set of text prompt embeddings comprising an averaged text prompt embedding might be obtained by averaging the text prompt embeddings of the individual text prompts of the respective set. Each averaged text prompt embedding represents a distinct state, i.e. a normal state or an anomaly type. This process yields a first group of anomaly-aware text prompt embeddings 106, comprising a plurality of anomaly-aware text prompts embeddings, in particular K1+1 anomaly-aware text prompts embedding, the first group of anomaly-aware text prompt embeddings 106 comprising a first set of text prompt embeddings associated with the normal state of the first object without any anomaly and K1 sets of text prompt embeddings associated with the plurality of anomaly types of the first object, i.e. K1+1 averaged text prompt embeddings. In other words, this process yields K1+1 averaged text embeddings ${z}^{t} ∈ {ℝ}^{{N}_{z}}$, each representing a distinct state

An image feature encoder 110, or image encoder or visual encoder briefly, provides image embeddings based on the digital image.

Further, the model comprises at least one adapter 112, for example comprising a single linear layer. The adapter 112 used to align the textual and the visual representations, namely the text prompt embeddings and the image embeddings, in a joint feature space.

According to the example, the method comprises providing providing image patch embeddings 114 at a number of m stages, for example m=4, which means image patch embeddings 114 are provided at four stages.

In other words, each image x is provided as input to the image encoder 110 and adapter 112 to get image patch embeddings at m different stages during encoding, namely ${e}_{i}^{p} ∈ {ℝ}^{h \times w \times {N}_{i}}$, with the resolution h × w.

For each stage of the m stages, an adapter 112 aligns the image patch embeddings 114 of the respective stage with the anomaly-aware text prompt embeddings of the first group of anomaly-aware text prompt embeddings 106. Therefore, at each stage a similarity map 116 is provided by comparing the image patch embeddings of the respective stage with the text prompt embeddings. For image patch embeddings 114 at four different stages, four similarity maps are obtained. Each similarity map 116 may be up-sampled, to match the size of the digital image x, and aligned with the ground truth multi-anomaly label, i.e. the ground truth multi-anomaly segmentation map.

In other words, For image patch embeddings at each stage i, a linear adapter takes ${e}_{i}^{p}$ as input and outputs ${z}_{i}^{p} ∈ {ℝ}^{h \times w \times {N}_{z}}$*.* They are compared with K1 + 1 text embeddings *z^{t}* to get the similarity map at each stage. For image patch embeddings at four different stages, four similarity maps ${S}_{i} ∈ {ℝ}^{\left(K1+1\right) \times h \times w}$ are derived, where h, w are the resolution of the similarity maps, K1 is the number of anomaly types. Each map *Sᵢ* is up-sampled, to match the size of the input image, and aligned with the ground truth segmentation map *M'ₓ*.

According to the example, training of the model is based on a combined a combined loss function 118, wherein the loss function comprises a loss addressing class imbalance applied on the ground truth multi-anomaly label and a loss addressing image segmentation task applied to the ground truth binary anomaly label 120. The loss function addressing class imbalance issues is for example focal loss. Such a loss function is beneficial especially in tasks like object detection where there is often a significant imbalance between classes. For example, the model is trained with a high number of normal images of the first object in a normal state without any anomaly and low number of abnormal images of the first object comprising one or more anomaly types of the plurality of anomaly classes. It is suggested to apply the focal loss for multi-anomaly segmentation along with the binary dice loss for anomaly segmentation. These two training objectives may be combined to form the final loss function. $L = {\sum }_{i = 1}^{m} {L}_{focal} \left(UP\left({S}_{i}\right),M{′}_{x}\right) + {L}_{dice} \left(1-UP\left({S}_{i}\right)\left[0\right],{M}_{x}\right)$, where *M'ₓ* represents the ground truth multi-anomaly segmentation map, and *Mₓ* is the binary anomaly map. UP(·) denotes the up-sampling function used to scale the similarity map to the input image resolution.

According to an embodiment, providing the at least one image embedding of the digital image comprises providing a global image embedding 122 with the image encoder 110, wherein the global image embedding might be described as *z^{x}* ∈ ${ℝ}^{{N}_{z}}$. The model is trained to determine a global anomaly score aₓ based on global similarity scores 124, wherein each global similarity score is determined by comparing the global image embedding 122 with a respective set of text prompt embedding of the first group of anomaly-aware text prompt embeddings 106. This process yields K1+ 1 global similarity scores 124. After normalization, the complements of the global similarity scores 124 compared to the first set of text prompt embeddings associated with the normal state of the first object 108 without any anomaly serve as the global anomaly score aₓ. The global anomaly score aₓ is a single score that represents the degree of anomaly.

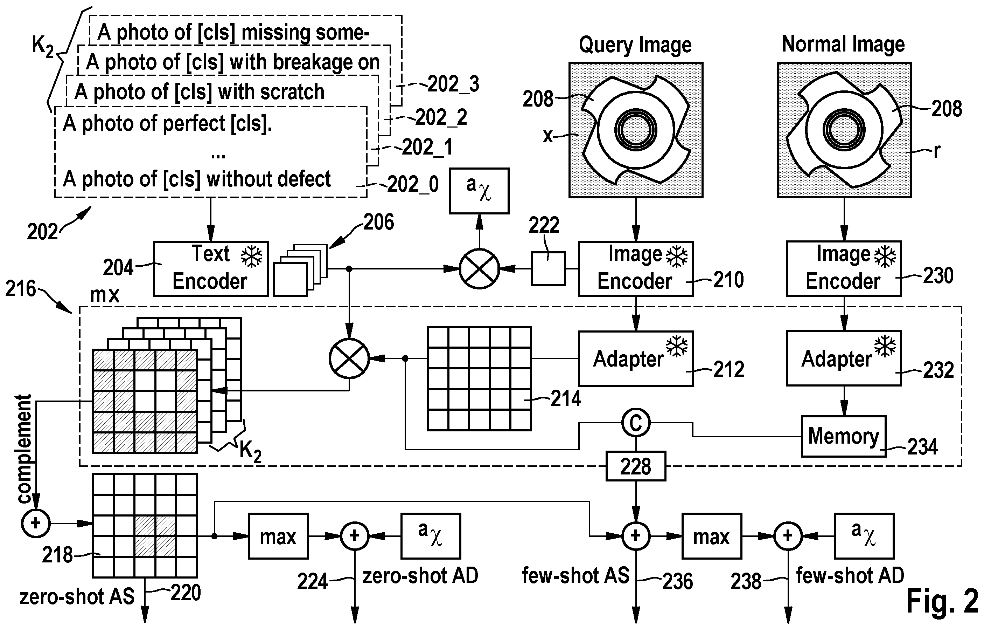

Figure 2 depicts schematically overview of a method 200 for evaluating a digital query image x depicting a second object 208. The method uses a model, which was trained or pre-trained according to a method 100.

The data set for inference may differ from the data set for training, but has the same structure.

The digital query image x is for example a digital photo, a video image, a radar image, a LiDAR image, an ultrasound image, a motion image or a thermal image, an X-ray image, an MRI scan or a CT scan.

The method 200 might be applied to unseen data, wherein the second object 208 depicted by the query image x differs from the first object 108 depicted by digital image x during training 100.

A second group of anomaly-aware text prompts 202, comprising a plurality of anomaly-aware text prompts, in particular K2+1 anomaly-aware text prompts, are provided. The second group of anomaly-aware text prompts 202 comprising a first set of text prompts associated with the normal state of the second object 208 without any anomaly and K2 sets of text prompts associated with K2 anomaly types of the second object.

For example, a first set of text prompts 202_0 associated with the normal state of the first object comprises i.e. the following text prompts:
*"a photo of perfect [object]",..., "a photo of [object] without defect",...*

For example, a set 202_1 of the K1 sets of text prompts associated with K1 anomaly types of the first object comprises i.e. the following text prompt:
*"a photo of [object] with scratch"*

For example, a set 102_2 of the K1 sets of text prompts associated with K1 anomaly types of the first object comprises i.e. the following text prompt:
*"a photo of [object] with breakage on"*

For example, a set 202_3 of the K1 sets of text prompts associated with K1 anomaly types of the first object comprises i.e. the following text prompt:
*"a photo of [object] missing some"*

The second group of anomaly-aware text prompts 202 is fed into a text feature encoder 204 corresponding to the text encoder 104 of the model of Fig. 1 to provide text prompt embeddings based on the text prompts. For each set of text prompts, a set of text prompt embeddings comprising an averaged text prompt embedding might be obtained by averaging the text prompt embeddings of the individual text prompts of the respective set. Each averaged text prompt embedding represents a distinct state, i.e. a normal state or an anomaly type. This process yields a second group of anomaly-aware text prompt embeddings 206, comprising a plurality of anomaly-aware text prompts embeddings, in particular K2+1 anomaly-aware text prompts embedding, the second group of anomaly-aware text prompt embeddings 206 comprising a first set of text prompt embeddings associated with the normal state of the second object without any anomaly and K1 sets of text prompt embeddings associated with the plurality of anomaly types of the second object, i.e. K2+1 averaged text prompt embeddings.

The first group of anomaly-aware text prompt embeddings 106 of method 100 differs from the second group of anomaly-aware text prompt embeddings 206 of method 200.

An image feature encoder 210 corresponding to the image encoder 110 of the model of Fig. 1, provides image embeddings based on the digital query image x.

Further, the model comprises at least one adapter 212, corresponding to a trained adapter 112 of model of Fig. 1, for example comprising a single linear layer. The adapter 212 used to align the textual and the visual representations, namely the text prompt embeddings and the image embeddings, in a joint feature space.

According to the example, the method comprises providing providing image patch embeddings 214 at a number of m stages, for example m=4, which means image patch embeddings 214 are provided at four stages.

For each stage of the m stages, an adapter 212 aligns the image patch embeddings 114 of the respective stage with the anomaly-aware text prompt embeddings of the second group of anomaly-aware text prompt embeddings 206.

Therefore, at each stage a similarity map 216, ${S}_{i} ∈ {ℝ}^{\left(K2+1\right) \times h \times w}$, is provided by comparing the image patch embeddings 214 of each stage with the text prompt embeddings. For image patch embeddings 214 at four different stages, four similarity maps 216 are obtained. Each similarity map 216 may be up-sampled, to match the size of the query image x, and then averaged to produce at least one anomaly map, for example a multi-anomaly segmentation map. The multi-anomaly segmentation map captures both the anomaly locations and their respective anomaly types, enabling it to effectively support the multi-anomaly segmentation task. In other words, the multi-anomaly segmentation map is calculated by averaging the up-sampled similarity maps: $\hat{M} {′}_{x} = \frac{1}{m} {\sum }_{i = 1}^{m} UP \left({S}_{i}\right)$.

According the example, method 200 comprises providing a global image embedding 222, *z^{x},* with the image encoder 210. The method 200 comprises determining a global anomaly score aₓ based on global similarity scores 224, wherein each global similarity score is determined by comparing the global image embedding 222 with a respective set of text prompt embeddings of the second group of anomaly-aware text prompt embeddings 206. This process yields K2 + 1 global similarity scores. After normalization, the complements of the global similarity scores 224 compared to the first set of text prompt embeddings associated with the normal state of the second object without any anomaly serve as the global anomaly score aₓ.

According to an example, the method comprises zero-shot learning, which means that unseen data is applied to the model. For zero-shot learning, the query image x may be provided with ground truth labels.

When performing zero-shot learning, anomaly segmentation is performed based on the anomaly map 218 and at least one ground truth label of the query image x and/or anomaly detection is performed based on the anomaly map 218 and the global anomaly score aₓ.

The anomaly map 218 might be obtained by taking a first layer of each of the similarity maps 216 and perform a complement operation on each pixel to create an respective anomaly score map based on a respective similarity map, wherein the anomaly score maps are then averaged to obtain the anomaly map 218. This can be described as ${\hat{M}}_{x} = \frac{1}{m} {\sum }_{i = 1}^{m} 1 - UP \left({S}_{i}\right) \left[0\right] .$

For zero-shot learning, the anomaly map 218 is used for anomaly segmentation 220 and compared with the ground truth labels. For zero-shot anomaly detection 224, the highest anomaly score 226 on the anomaly map 218, namely max (*M̃ₓ*) and global anomaly score aₓ are averaged and then compared against a threshold to determine whether the query image x contains an anomaly.

According to the example, the method may comprise few-shot learning. For few-shot learning, at least one or more reference images r depicting the second object 208 in a normal state, i.e. without anomalies, are provided.

According to the example, a reference anomaly map 228 is determined based on the query image x and the at least one reference image r.

Both, the query image x and the at least one reference image r are fed into a respective image encoder 210, 230 and adapter 212, 232 to determine image patch embeddings at each stage, namely image patch embeddings ${z}_{i}^{p 1} , {z}_{i}^{p 2} ∈$ ${ℝ}^{h \times w \times {N}_{z}}$, with the resolution h x w, where *N_{z}* is the vector dimension. A memory storage 234 stores the features of the reference image r. Reference similarity maps *S'ᵢ* may be calculated by a cosine similarity between the corresponding image patches of query image x and the at least one reference image r, namely $S {′}_{i} \left[a, b\right] = cosine similarity \left({z}_{i}^{p 1}\left[a, b\right],{z}_{i}^{p 2}\left[a, b\right]\right.$, where *a* ∈ {1, ... , *h*}, *b* ∈ {1, ... , w}.

The reference similarity maps are up-sampled to match the resolution of the original query image and then averaged to obtain the reference anomaly map 228, *M̃_{ref}.*

For few-shot anomaly segmentation 236, the anomaly map 218 and the reference anomaly map 228 may be combined to a final anomaly map, which is used for few-shot anomaly segmentation, namely , ${\hat{M}}_{final} = \frac{1}{2} \left({\hat{M}}_{ref}+{\hat{M}}_{ref}\right)$. For few-shot anomaly detection 238, the highest anomaly score 240 on the final anomaly map, namely max (*M̃_{final}*) and the global anomaly score aₓ are averaged and then compared against a threshold to determine whether the query image x contains an anomaly.

According to an embodiment, in text prompts associated with anomaly types that are not applicable to the second object are excluded from the second group of anomaly-aware text prompt embeddings 202. For example, only text prompts associated with anomaly types applicable to the second object 208 are fed to the text encoder 204, in particular by applying a filtering step. For a specific object type, only certain anomaly types might be relevant. During the inference phase, the filtering step excludes text prompt sets associated with anomaly types that are not applicable to the object, ensuring that only relevant anomaly types are considered.

## Claims

1. A computer-implemented method (100) for training a model for evaluating a digital image (x) depicting a first object with regard to an anomaly of the object, the method (100) comprising the following steps:
- providing the digital image (x) labeled with a ground truth label, wherein the ground truth label comprises a least a ground truth multi-anomaly label, the ground truth multi-anomaly label referring to one normal class associated with a normal state of the object without any anomaly and a plurality of anomaly classes associated with a plurality of anomaly types of the first object,
- providing a first group of anomaly-aware text prompt embeddings (106), the first group of anomaly-aware text prompt embeddings (106) comprising a first set of text prompt embeddings associated with the normal state of the first object without any anomaly and a plurality of sets of text prompt embeddings associated with the plurality of anomaly types of the first object, and
- providing at least one image embedding (114, 122) of the digital image (x),
- training the model for determining at least one similarity map (116) by comparing the at least one image embedding with the anomaly-aware text prompt embeddings of the first group of anomaly-aware text prompt embeddings (106) by applying a loss function on the ground truth multi-anomaly label.

2. The method (100) according to claim 1, wherein providing the at least one image embedding (114) of the digital image (x) comprises providing image patch embeddings (114) at at least two stages.

3. The method (100) according to claim 2, wherein the image patch embeddings (114) of each stage are aligned with the anomaly-aware text prompt embeddings of the first group of anomaly-aware text prompt embeddings.

4. The method (100) according to one of the preceding claims, wherein the ground truth label comprises a least a ground truth binary anomaly label (120), and the model is trained based on a combined loss function, wherein the loss function comprises a loss addressing class imbalance applied on the ground truth multi-anomaly label and a loss addressing image segmentation task applied to the ground truth binary anomaly label.

5. The method (100) according to one of the preceding claims, wherein providing the at least one image embedding (122) of the digital image (x) comprises providing a global image embedding (122), and the model is trained to determine a global anomaly score (aₓ) based on a similarity score (124), wherein the similarity score (124) is determined by comparing the global image embedding with the first group of anomaly-aware text prompt embeddings.

6. A computer-implemented method (200) for evaluating a digital query image (x) depicting a second object (208) using model trained with a method according (100) to any of claims 1 to 5, the method (200) comprising the following steps:
- providing at least one digital query image (x) depicting the second object (208);
- providing a second group of anomaly-aware text prompt embeddings (206), the second group of anomaly-aware text prompt embeddings (206) comprising a first set of text prompt embeddings associated with a normal state of the second object (208) without any anomaly and a plurality of sets of text prompt embeddings associated with a plurality of anomaly types of the second object,
- determining a least one similarity map (216) by comparing at least one image embedding (214) of the digital query (x) image with the second group of anomaly-aware text prompt embeddings (206),
- determining an anomaly map (218) based on the at least one similarity map (216), and
- perform anomaly segmentation and/or anomaly detection at least based on the anomaly map (218).

7. The method (200) according to claim 6, wherein the first object (108) differs from the second object (208) and the first group of anomaly-aware text prompt embeddings (106) differs from the second group of anomaly-aware text prompt embeddings (206).

8. The method (200) according to claim 6 or 7, wherein the method comprises determining a global anomaly score (aₓ) comparing at least one image embedding (222) of the digital query image (x) with the second group of anomaly-aware text prompt embeddings (206).

9. The method (200) according to one of the claims 6 to 8, wherein zero-shot anomaly segmentation (220) is performed based on an anomaly map (218) and at least one ground truth label of the query image (x) and/or zero-shot anomaly detection (224) is performed based on the anomaly map (218) and the global anomaly score (aₓ).

10. The method (200) according to one of the claims 6 to 9, wherein at least one reference image (r) is provided, and wherein a reference anomaly map (228) is determined based on the query image (x) and the at least one reference image (r), wherein few-shot anomaly segmentation (236) is performed based on the anomaly map (218) and the reference anomaly map (228) and/or few-shot anomaly detection (238) is performed based on the anomaly map (218) and the reference anomaly map (228) and the global anomaly score (aₓ).

11. The method (200) according to one of the claims 6 to 10, wherein text prompts associated with anomaly types that are not applicable to the second object are excluded from the second group of anomaly-aware text prompt embeddings (206).

12. A model for evaluating a digital image depicting an object or a device comprising a model for evaluating a digital image depicting an object with regard to an anomaly of the object in a method (100) according to one of the claims 1 to 5 and/or in a method (200) according to one of the claims 6 to 11, the model comprising at least one text encoder for providing text prompt embeddings, in particular a first group of anomaly-aware text prompt embeddings and/or a second group of anomaly-aware text prompt embeddings, at least one image encoder for providing image embeddings and at least one adapter for aligning the text prompt embeddings and the image embeddings in a joint feature space.

13. A first group of anomaly-aware text prompts (102) comprising a first set of text prompts associated with a normal state of a first object (108) without any anomaly and a plurality of sets of text prompts associated with a plurality of anomaly types of the first object (108) and/or a second group of anomaly-aware text prompts (202) comprising a first set of text prompts associated with a normal state of a second object (208) without any anomaly and a plurality of sets of text prompts associated with a plurality of anomaly types of the second object (208), wherein the first group of anomaly-aware text prompts and/or the second group of anomaly-aware text prompts is employed to provide a first group of anomaly-aware text prompts embeddings (106) and/or a second group of anomaly-aware text prompts embeddings (206) in a method (100) according to one of the claims 1 to 5 and/or in a method (200) according to one of the claims 6 to 11.

14. Use of a computer-implemented method (100) according to one of the claims 1 to 5 and/or a method (200) according to one of the claims 6 to 11 and/or a model according to claim 12 and/or a first group of anomaly-aware text prompts (102) or a second group of anomaly-aware text prompts (202) according to claims 13 for training a model for evaluating a digital image (x) and/or for evaluating a digital query image (x), for image evaluation in the field of medical image analysis or in defect detection in production processes.
